# EUROPEAN PATENT APPLICATION

(11) **EP 4 835 540 A1**
(43) Date of publication of application: **04.11.2026**
(21) Application number: 25745324.1
(22) Date of filing: 22.01.2025
(51) Int. Cl.: G02B 27/01, G02C 3/00

(54) **LENS AND WEARABLE ELECTRONIC DEVICE COMPRISING SAME**

(30) Priority: 23.01.2024 KR 20240010340; 23.07.2024 KR 20240097218
(71) Applicant: Samsung Electronics Co., Ltd., Suwon-si, Gyeonggi-do 16677 (KR)
(72) Inventor: YANG, Hyunmo, Suwon-si Gyeonggi-do 16677 (KR); PARK, Sanghun, Suwon-si Gyeonggi-do 16677 (KR); PARK, Jonggyu, Suwon-si Gyeonggi-do 16677 (KR); LIM, Gisoo, Suwon-si Gyeonggi-do 16677 (KR); KWAK, Myunghoon, Suwon-si Gyeonggi-do 16677 (KR); KIM, Gyeongbeom, Suwon-si Gyeonggi-do 16677 (KR)
(74) Representative: Nederlandsch Octrooibureau
(86) International application number: PCT/KR2025/001242
(87) International publication number: WO 2025/159499

(57) **Abstract**

According to an embodiment of the present disclosure, the wearable electronic device may comprise: a lens frame; a waveguide disposed on the lens frame and including a front surface configured to face the eyes of a user who wears the wearable electronic device, and a rear surface opposite to the front surface; a first lens disposed on the front surface of the waveguide, detachably coupled to the lens frame, and configured to adjust the focal distance of light regarding a virtual image output from the waveguide and the focal distance of light regarding an external real object; and a second lens disposed on the rear surface of the waveguide, coupled to the waveguide so as to be integrally formed with the waveguide, and configured to adjust the focal distance of a real image with respect to an external real object. Various other embodiments may be possible.

## Description

### [Technical Field]

Various embodiments disclosed herein relate to a wearable electronic device, for example, to a lens and a wearable electronic device including the same.

### [Background Art]

Portable electronic devices, for example, electronic organizers, portable multimedia players, mobile communication terminals, or tablet PCs, generally include a display member and a battery, and have had an appearance of a bar type, a folder type, or a sliding type due to the shape of the display member or the battery. Recently, as performance of display members and batteries has improved, display members and batteries have been miniaturized, and wearable electronic devices that may be worn on a part of a body, such as a wrist or a head, have come to be commercialized. Since the wearable electronic device is worn directly on the body, portability and/or accessibility of a user may be improved.

Among wearable electronic devices, an electronic device in a form wearable on a user's face, for example, a head-mounted device (HMD), is disclosed. A head-mounted device may be usefully utilized for implementation of virtual reality or augmented reality. For example, the wearable electronic device may implement virtual reality by three-dimensionally providing an image of a virtual space in a game that has been enjoyed through a television or a monitor for a computer, while blocking an image of a real sp the user stays. Another type of wearable electronic device may pr ace in which ovide augmented reality that provides various visual information to the user by implementing a virtual image while providing an environment in which an actual image of a space in which the user stays is visually recognizable by the user.

The above information may be provided as related art for the purpose of facilitating an understanding of the disclosure. No assertion or determination is made as to whether any of the foregoing may be regarded as prior art with respect to the disclosure.

### [Detailed Description of the Invention]

### [Technical Solution]

According to an embodiment of the disclosure, an wearable electronic device may include a lens frame, a waveguide disposed in the lens frame and including a front side configured to face a user's eye when the wearable electronic device is worn by the user and a rear side opposite to the front side, a first lens disposed on the front side of the waveguide, detachably coupled to the lens frame, and configured to adjust a focal length of light for a virtual image output from the waveguide and a focal length of light for an external real object, and a second lens disposed on the rear side of the waveguide, coupled to the waveguide to be formed integrally with the waveguide, and configured to adjust the focal length of light for an external real object.

According to an embodiment of the disclosure, an wearable electronic device may include a lens frame, a waveguide disposed in the lens frame and including a front side facing a user's eye and a rear side opposite to the front side, a first lens disposed on the front side of the waveguide, detachably coupled to the lens frame, and configured to adjust a focal length of light for a virtual image output from the waveguide and a focal length of light for an external real object, a holder configured to fix the first lens to the lens frame, and a second lens disposed on the rear side of the waveguide and configured to adjust the focal length of light for an external real object.

### [Brief Description of Drawings]

FIG. 1 is a block diagram of an electronic device in a network environment, according to various embodiments of the disclosure.
FIG. 2 is a perspective view of a wearable electronic device according to various embodiments of the disclosure.
FIG. 3 is an exploded perspective view illustrating a lens assembly according to an embodiment of the disclosure.
FIG. 4A is a cross-sectional view of a first lens according to an embodiment of the disclosure.
FIG. 4B is a cross-sectional view of the first lens according to an embodiment of the disclosure.
FIG. 4C is a cross-sectional view illustrating a state in which the first lens and a holder are coupled to each other according to an embodiment of the disclosure.
FIG. 5 is a cross-sectional perspective view of a lens assembly according to an embodiment of the disclosure.
FIG. 6 is a cross-sectional view illustrating a state in which the first lens and the holder are coupled to each other according to an embodiment of the disclosure.
FIG. 7 is a cross-sectional view of a lens assembly according to an embodiment of the disclosure.
FIG. 8 is a perspective view of a lens assembly according to an embodiment of the disclosure.
FIG. 9 is a plan view of the lens assembly according to an embodiment of the disclosure.
FIG. 10 is a cross-sectional view illustrating a lens frame and a holder according to an embodiment of the disclosure.
FIGS. 11A and 11B are cross-sectional views of the lens assembly according to an embodiment of the disclosure.
FIG. 12 is a perspective view illustrating a state in which the holder is separated, according to an embodiment of the disclosure.
FIG. 13A is a perspective view of a lens assembly according to an embodiment of the disclosure.
FIG. 13B is a perspective view of a lens assembly including a holder and a first lens according to an embodiment of the disclosure.
FIG. 14 is a plan view illustrating a lens assembly according to an embodiment of the disclosure.
FIG. 15 is a cross-sectional of the lens assembly according to an embodiment of the disclosure.

### [Mode for Carrying out the Invention]

Hereinafter, embodiments of the disclosure will be described in detail with reference to the drawings so that those ordinarily skilled in the art to which the disclosure pertains may easily practice the disclosure. However, the disclosure may be implemented in various different forms and is not limited to the embodiments described herein. In connection with the description of the drawings, the same or similar reference numerals may be used for the same or similar elements. In addition, in the drawings and the related description, descriptions of well-known functions and configurations may be omitted for clarity and conciseness.

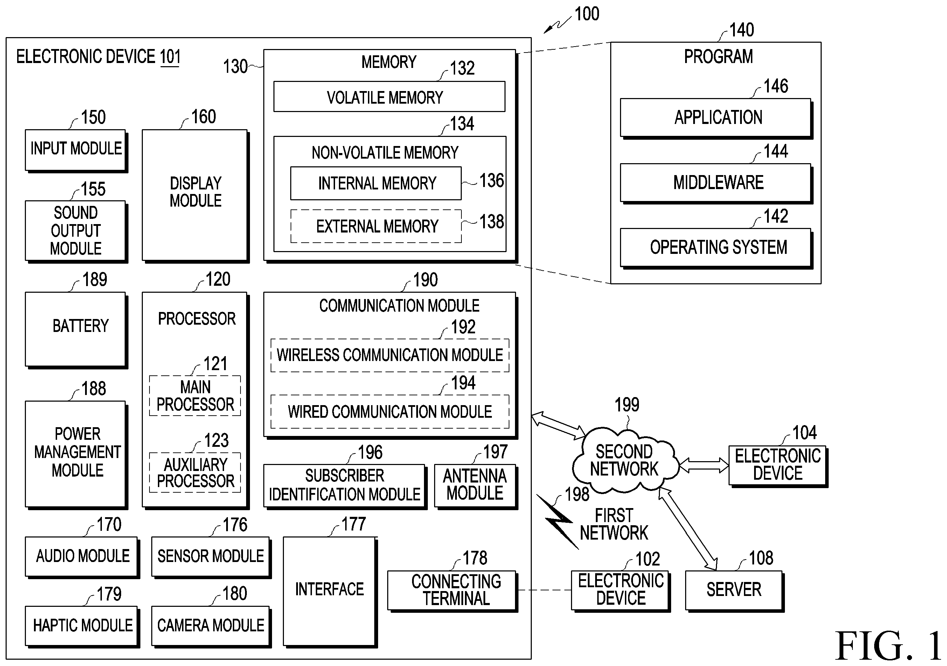

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

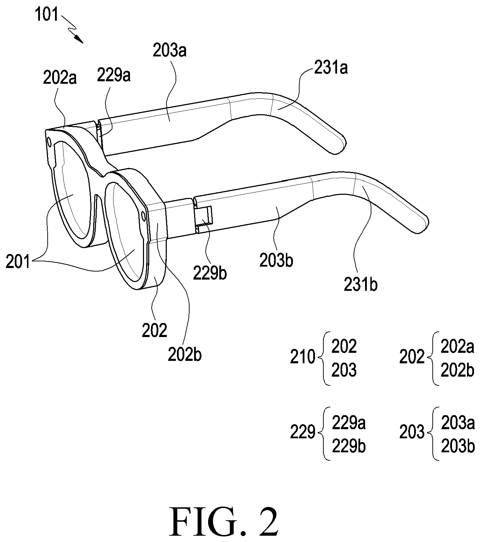

FIG. 2 is a perspective view of a wearable electronic device according to various embodiments of the disclosure.

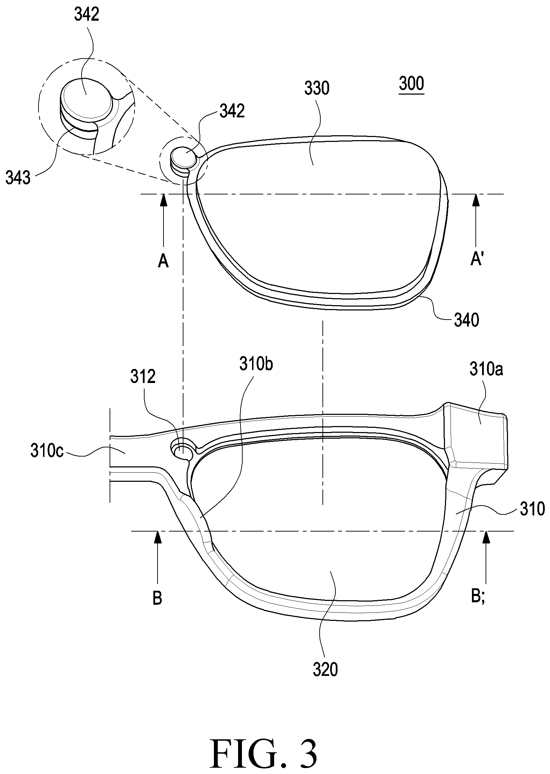

The embodiment of FIG. 2 may be combined with the embodiment of FIG. 1 or the embodiments of FIGS. 3 to 15.

Referring to FIG. 2, the wearable electronic device 101 is an electronic device in the form of glasses (e.g., the electronic device 101 of FIG. 1), and a user may visually recognize surrounding objects or an environment while wearing the wearable electronic device 101. For example, the wearable electronic device 101 may include smart glasses or augmented reality (AR) glasses capable of directly providing an image in front of a user's eyes. The configuration of the wearable electronic device 101 of FIG. 2 may be partially or entirely the same as the configuration of the electronic device 101 of FIG. 1.

According to an embodiment, the wearable electronic device 101 may include a housing 210 forming an exterior of the wearable electronic device 101. The housing 210 may provide a space in which components of the wearable electronic device 101 may be disposed. For example, the housing 210 may include a lens frame 202 and one or more wearing members 203.

According to an embodiment, the wearable electronic device 101 may include a display member 201 disposed in the housing 210 and capable of outputting a visual image. For example, the wearable electronic device 101 may include one or more display members 201 capable of providing visual information (or an image) to a user. For example, the display members 201 may each include a module equipped with a lens, a display, a waveguide, and/or a touch circuit. According to an embodiment, the display members 201 may be formed to be transparent or translucent. According to an embodiment, the display members 201 may each include a glass portion made of a translucent material or a window member in which a transmittance of light may be adjusted according to adjustment of a tint density.

According to an embodiment, the lens frame 202 may at least partially accommodate the display members 201. For example, the lens frame 202 may at least partially surround the edges of the display members 201. According to an embodiment, the lens frame 202 may position at least one of the display members 201 to correspond to a user's eye. According to an embodiment, the lens frame 202 may include a rim of a general eyeglass structure.

According to an embodiment, the lens frame 202 may include at least one closed curve surrounding the display members 201. According to an embodiment, the lens frame 202 may include a first end portion 202a and a second end portion 202b opposite to the first end portion 202a. The first end portion 202a may be disposed adjacent to a first wearing member 203a, and the second end portion 202b may be disposed adjacent to a second wearing member 203b.

According to an embodiment, the wearing members 203 may extend from the lens frame 202. For example, the wearing members 203 may extend from end portions of the lens frame 202 and, together with the lens frame 202, may be supported or positioned on a user's body (e.g., ears). According to an embodiment, the wearing members 203 may be rotatably coupled to the lens frame 202 via hinge structures 229. According to an embodiment, the wearing members 203 may each include an inner surface 231a configured to face a user's body and an outer surface 231b opposite to the inner surface 231a. According to an embodiment, the wearing members 203 may be at least partially formed of a flexible material (e.g., rubber). For example, the wearing members 203 may each be at least partially formed in a band shape surrounding at least a portion of a user's body (e.g., an ear).

According to an embodiment, the wearable electronic device 101 may include hinge structures 229 configured to allow the wearing members 203 to be folded with respect to the lens frame 202. The hinge structures 229 may be disposed between the lens frame 202 and the wearing members 203. While a user is not wearing the wearable electronic device 101, the user may fold the wearing members 203 with respect to the lens frame 202 to at least partially overlap the lens frame 202, so as to carry or store the wearable electronic device 101. According to an embodiment, the hinge structures 229 may include a first hinge structure 229a connected to a portion of the lens frame 202 (e.g., the first end portion 202a) and to the first wearing member 203a, and a second hinge structure 229b connected to a portion of the lens frame 202 (e.g., the second end portion 202b) and to the second wearing member 203b.

In the disclosure, the term "augmented reality (AR)" may refer to displaying, as a single image, a virtual image generated by a computer by overlaying the virtual image on a physical real-world environment or a real-world object in the real world.

In the disclosure, a "real scene" may refer to a scene of the real world viewed by an observer or a user through an augmented reality display device (e.g., the wearable electronic device 101), and may include one or more real-world objects. Meanwhile, a "virtual image" may be an image generated through a display engine. The virtual image may include both a static image and a dynamic image. Such a virtual image may be overlaid on a real scene and may be an image showing information about a real-world object in the real scene, information about an operation of the augmented reality device, or a control menu.

According to an embodiment, the wearable electronic device 101 may include a display engine configured to generate a virtual image composed of light generated by a light source.

According to an embodiment, the at least one display member 201 may include a waveguide (e.g., the waveguide 320 of FIG. 3) configured to guide, to a user's eyes, the virtual image provided from the display engine.

FIG. 3 is an exploded perspective view illustrating a lens assembly according to an embodiment of the disclosure.

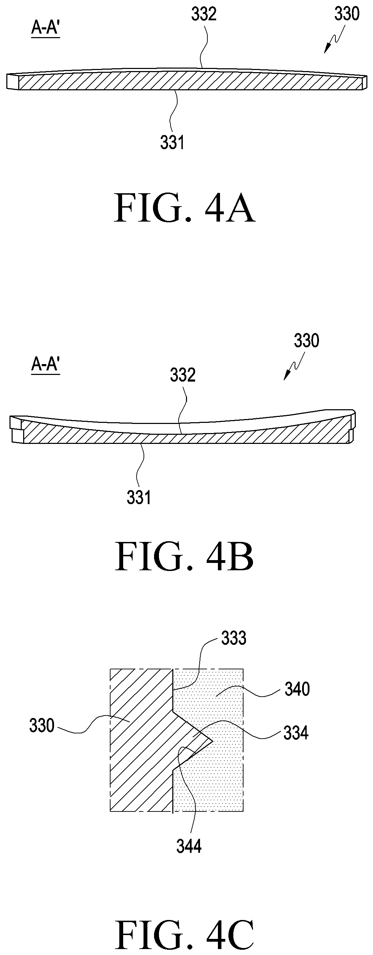

FIG. 4A is a cross-sectional view of a first lens according to an embodiment of the disclosure.

FIG. 4B is a cross-sectional view of the first lens according to an embodiment of the disclosure.

FIG. 4C is a cross-sectional view illustrating a state in which the first lens and a holder are coupled to each other according to an embodiment of the disclosure.

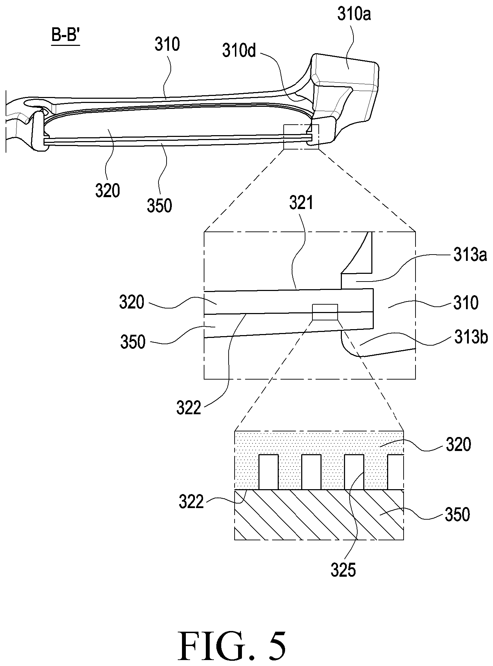

FIG. 5 is a cross-sectional perspective view of a lens assembly according to an embodiment of the disclosure.

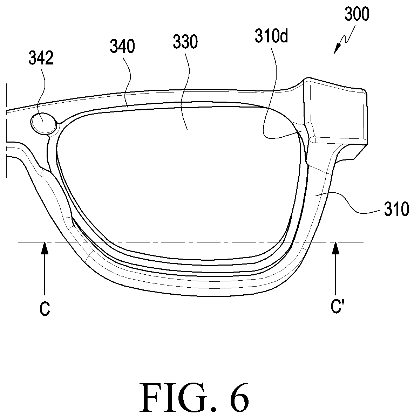

FIG. 6 is a cross-sectional view illustrating a state in which the first lens and the holder are coupled to each other according to an embodiment of the disclosure.

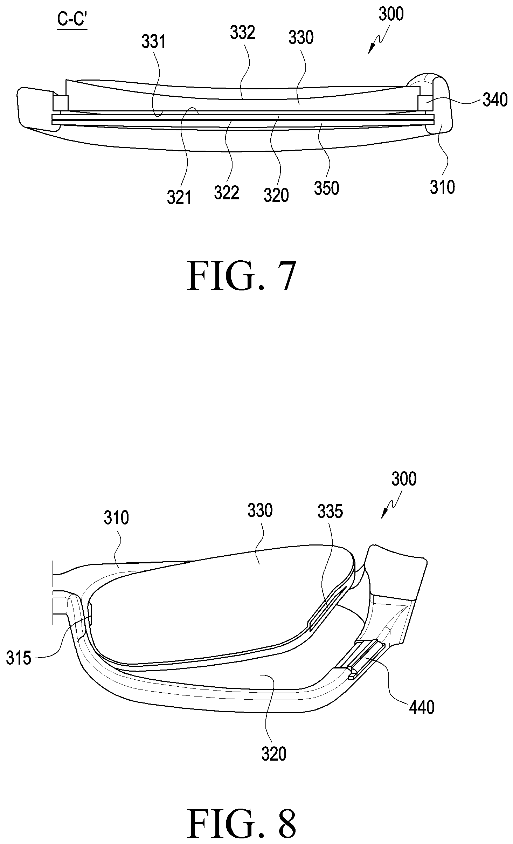

FIG. 7 is a cross-sectional view of a lens assembly according to an embodiment of the disclosure.

The embodiments of FIGS. 3 to 6 may be combined with the embodiments of FIGS. 1 and 2 or the embodiments of FIGS. 4A to 15.

Referring to FIGS. 3 to 6, a lens assembly 300 may include a lens frame 310, a waveguide 320, a first lens 330, a holder 340, and a second lens 350.

According to the illustrated embodiments, the lens assembly 300 corresponding to a user's right eye is illustrated, but the disclosure is not limited thereto and may include a pair of lens assemblies corresponding to both eyes of the user.

Hereinafter, descriptions of directions toward which the waveguide 320, the first lens 330, and the second lens 350 face may be defined as directions toward which centers of the respective components face, but are not limited thereto.

Referring to FIG. 3, the lens assembly 300 may form at least a part of a wearable electronic device (e.g., the wearable electronic device 101 of FIG. 2).

According to an embodiment, the lens frame 310 (e.g., the lens frame 202 of FIG. 2) may support the waveguide 320, the first lens 330, the holder 340, and the second lens (e.g., the second lens 350 of FIG. 5). The lens frame 310 may form an overall body of the lens assembly 300. The lens frame 310 may at least partially accommodate the waveguide 320, the first lens 330, the holder 340, and the second lens 350.

According to an embodiment, a display member (e.g., the display member 201 of FIG. 2) may include the waveguide 320, the first lens 330, and the second lens 350. An edge of the display member may be surrounded by the lens frame 310.

According to an embodiment, a pair of display members may be provided to correspond to a user's left eye and right eye, but the disclosure is not limited thereto.

According to an embodiment, the lens frame 310 may include a rim surrounding the edge of the display member. The rim may form an overall shape of the lens frame 310. The lens frame 310 may include a pair of rims. The pair of rims may respectively support or accommodate a pair of display members.

According to an embodiment, the lens frame 310 may include a connection portion 310a to which a wearing member (e.g., the wearing member 203 of FIG. 2) is rotatably or foldably coupled. A display engine configured to provide a virtual image to the waveguide 320 may be disposed in the connection portion 310a, but the disclosure is not limited thereto.

According to an embodiment, the lens frame 310 may include a nose pad 310b. The nose pad 310b may be supported by a user's nose.

According to an embodiment, the lens frame 310 may include a bridge 310c. The bridge 310c may be disposed between a pair of rims of the lens frame 310 to connect the pair of rims.

According to an embodiment, the lens frame 310 may include an accommodating portion 312 formed on at least a portion of the lens frame 310. The accommodating portion 312 may include a recess formed in a rim of the lens frame 310. The accommodating portion 312 may include a hole formed in the rim of the lens frame 310.

According to an embodiment, the accommodating portion 312 may accommodate an inserted portion 342 of the holder 340.

According to an embodiment, the waveguide 320 may be fixed to the lens frame 310, but the disclosure is not limited thereto. An edge of the waveguide 320 may be coupled to a rim of the lens frame 310.

According to an embodiment, the waveguide 320 may be configured to guide, to a user's eye, a virtual image generated from a display engine of the wearable electronic device. The display engine may be disposed in the connection portion 310a, but the disclosure is not limited thereto. The waveguide 320 may be formed of a material transparent to a visible-light band so that a real-world scene (e.g., a real object) may also be seen together with the virtual image, but the disclosure is not limited thereto. The display engine may be configured to generate light of the virtual image. The display engine may include a projector including an image panel, an illumination optical system, or a projection optical system. For example, the display engine may include a device configured to emit light for outputting a virtual object or a virtual image at a predetermined viewing angle. For example, the display engine may include a projector configured to project light generated by the image panel or a projector configured to scan modulated light, but the disclosure is not limited thereto.

According to an embodiment, the display engine may be configured to output polarized light or unpolarized light depending on the type of the image panel or the illumination optical system. The display engine may include a liquid crystal on silicon (LCoS) panel, an LED on silicon (LEDoS) panel, or a digital micromirror device (DMD) panel, but the disclosure is not limited thereto.

According to an embodiment, the waveguide 320 may receive light of a virtual image output from the display engine. The light input to the waveguide 320 may be diffracted on the waveguide 320 or in the waveguide 320 and may be output to a user's eye.

According to an embodiment, the waveguide 320 may be disposed between the first lens 330 and the second lens (e.g., the second lens 350 of FIG. 5).

According to an embodiment, the first lens 330 may be disposed on an inner surface of the waveguide 320 (e.g., a surface facing a user's eye). The second lens 350 may be disposed on an outer surface of the waveguide 320 (e.g., a surface facing a real object).

According to an embodiment, the first lens 330 may be detachably coupled to the lens frame 310. For example, the first lens 330 may be configured to be replaceable. For example, the lens assembly 300 may be configured such that the first lens 330 is replaceable according to a user's eyesight.

According to an embodiment, a focal length of light for a virtual image provided from the display engine and output toward a user's eye through the waveguide 320 may have a value from about 4 meters to infinity. For example, when the virtual image having the focal length reaches the user's eye, the user may feel that the virtual image is unnatural.

According to an embodiment, the first lens 330 may be disposed between the waveguide 320 and the user's eye, so as to reduce the focal length of the virtual image reaching the user's eye. The first lens 330 may have negative lens power. For example, the focal length of the virtual image output from the waveguide 320 and reaching the user's eye through the first lens 330 may be reduced to about 2 meters, but the disclosure is not limited thereto. As the focal length of the virtual image reaching the user's eye through the first lens 330 is adjusted, the user may feel that the virtual image is not unnatural. The first lens 330 may be defined and/or referred to as a pull lens, but the disclosure is not limited thereto.

According to an embodiment, the first lens 330 may be configured to adjust a focal length of light for a virtual image output from the waveguide 320 and a focal length of light for an external real object.

According to an embodiment, the first lens 330 may have a vision correction function corresponding to a user's eyesight.

According to an embodiment, the first lens 330 may be detachably coupled to a rim of the lens frame 310 through the holder 340.

According to an embodiment, the holder 340 may surround an edge of the first lens 330. According to an embodiment, the first lens 330 may be fixed to the holder 340.

According to an embodiment, the holder 340 may be coupled to the lens frame 310 or separated from the lens frame 310. The holder 340 may allow the first lens 330 to be fixed to the lens frame 310.

According to an embodiment, the holder 340 may include an inserted portion 342. The inserted portion 342 may protrude from at least a portion of the holder 340, but the disclosure is not limited thereto. The inserted portion 342 may be aligned with the accommodating portion 312 and inserted into the accommodating portion 312.

According to an embodiment, the inserted portion 342 may include a magnet. The magnet of the inserted portion 342 may form an attractive force with a magnet or metal disposed in the accommodating portion 312. The magnet of the inserted portion 342 may provide a force for maintaining a state in which the holder 340 disposed on the lens frame 310 is fixed to the lens frame 310.

According to an embodiment, the inserted portion 342 may include a slit 343 formed on an outer surface of the inserted portion 342. The slit 343 may be recessed in at least a portion of the outer surface of the inserted portion 342. The slit 343 may provide a space that may be caught by a user's fingernail so that the holder 340 and the first lens 330 may be easily separated from the lens frame 310.

FIGS. 4A and 4B illustrate cross-sections of the first lens 330 taken along line A-A' of FIG. 3.

Referring to FIGS. 4A and 4B, the first lens 330 may include a first surface 331 and a second surface 332. The first surface 331 may face the waveguide 320. The second surface 332 may be opposite to the first surface 331. The second surface 332 may face a user's eye.

According to an embodiment, the first lens 330 may have negative lens power so as to reduce a focal length of light for a virtual image output from the waveguide 320.

Referring to FIG. 4A, the first lens 330 may be formed to correspond to a user's eyesight requiring vision correction through a positive diopter value. For example, the first surface 331 facing the waveguide 320 may include a flat surface, and the second surface 332 facing a user's eye may include a convex surface.

Referring to FIG. 4B, the first lens 330 may be formed to correspond to a user's eyesight requiring vision correction through a negative diopter value. For example, the first surface 331 facing the waveguide 320 may include a flat surface, and the second surface 332 facing a user's eye may include a concave surface.

Referring to FIGS. 4A and 4B, the lens assembly 300 may be configured to allow the first lens 330 to be selected and/or replaced according to a user's eyesight, so that the user may use the wearable electronic device through the first lens 330 corresponding to the user's eyesight. According to an embodiment, the first lens 330 may be formed to correspond to a user's eyesight requiring no vision correction with a zero-diopter value, but the disclosure is not limited thereto.

Referring to FIG. 4C, the first lens 330 may include a lateral surface 333 and a protrusion 334. The lateral surface 333 may be defined as a surface contacting or connected to the holder 340. The lateral surface 333 may be defined as an edge of the first lens 330. The protrusion 334 may protrude from the lateral surface 333. The holder 340 may include a recess 344 formed in a portion facing the lateral surface 333 of the first lens 330. The protrusion 334 may be accommodated and/or fixed in the recess 344. The protrusion 334 and the recess 344 may limit and/or reduce separation of the first lens 330 from the holder 340. According to an embodiment, a recess may be formed in the lateral surface 333 of the first lens 330, and a protrusion may be formed on the holder 340.

FIG. 5 is a view including a cross-section taken along line B-B' of FIG. 3.

Referring to FIG. 5, the waveguide 320 may include a front side 321 and a rear side 322. The front side 321 may face a user's eye. The rear side 322 may be opposite to the front side 321. For example, the front side 321 may face a user's eye when the wearable electronic device is worn by the user. The front side 321 may be defined and/or referred to as a first portion. The rear side 322 may be defined and/or referred to as a second portion.

According to an embodiment, the front side 321 may face the first surface (e.g., the first surface 331 of FIG. 4) of the first lens 330. The front side 321 may include a flat surface. The front side 321 may contact the first surface 331. For example, no gap may be formed between the front side 321 and the first surface 331. As the waveguide 320 and the first lens 330 are in contact with each other so that no gap is formed therebetween, the overall thickness of the lens assembly 300 may be provided to be small.

According to an embodiment, the rear side 322 may face the second lens 350. The rear side 322 may include a flat surface. The waveguide 320 may include a diffractive element 325 formed on the rear side 322. The diffractive element 325 may diffract light for a virtual image generated or output from the display engine. For example, light of the virtual image generated or output from the display engine may be diffracted by the diffractive element 325 and output to a user's eye.

According to an embodiment, the diffractive element 325 may include a diffractive optical element (DOE), a holographic optical element (HOE), a polymer dispersed liquid crystal (PDLC), a meta surface, or a meta grating, but the disclosure is not limited thereto.

According to an embodiment, the diffractive element 325 may be formed on the rear side 322 and may be covered by the second lens 350. According to an embodiment, the front side 321 of the waveguide 320 may be exposed to the outside of the lens assembly 300 according to replacement of the first lens 330. The rear side 322 of the waveguide 320 may be covered by the second lens 350 and may not be exposed to the outside of the lens assembly 300. Accordingly, the diffractive element 325 formed on the rear side 322 is not exposed to the outside during distribution or use of the lens assembly 300 and/or the wearable electronic device, so that occurrence of damage and/or cracks may be limited and/or reduced.

According to an embodiment, the diffractive element 325 may be provided in a shape of a plurality of grooves when viewed in a cross-section of the waveguide 320, but the disclosure is not limited thereto. The diffractive element 325 may also be provided in a wave shape. The shape of the diffractive element 325 is exemplary, and the diffractive element 325 may have various shapes.

According to an embodiment, the second lens 350 may be disposed on the rear side 322 of the waveguide 320. The second lens 350 may cover the rear side 322.

According to an embodiment, the second lens 350 may be coupled to the waveguide 320 to be formed integrally with the waveguide 320.

According to an embodiment, the second lens 350 may increase a focal length of light for a real object reaching a user's eye. The second lens 350 may have positive lens power. For example, light for a real object reaching a user's eye from the real object may have a focal length increased by the second lens 350 and then reduced by the first lens 330. Accordingly, when the light for the real object reaches the user's eye, the user may not experience a perceptual discrepancy regarding the real object, and immersion may be enhanced. For example, if the second lens 350 is absent, the light for the real object may have a focal length reduced by the first lens 330. Accordingly, the user may feel a perceptual discrepancy because the real object is perceived differently from reality. The second lens 350 may be defined and/or referred to as a push lens, but the disclosure is not limited thereto.

According to an embodiment of the disclosure, a user may feel that a virtual image is not unnatural because the focal length for the virtual image is adjusted by the first lens 330. In addition, the user may feel that a real object is not unnatural because the focal length of light for the real object is adjusted by the second lens 350 and the first lens 330. In addition, the user may select and use the first lens 330 having a diopter corresponding to the user's eyesight and may use the wearable electronic device in accordance with the user's eyesight, and thus may be provided with an immersive AR environment.

According to an embodiment, the edge of the waveguide 320 and the edge of the second lens 350 may be surrounded by the lens frame 310. For example, a rim of the lens frame 310 may include a first fixing portion 313a and a second fixing portion 313b. The first fixing portion 313a and the second fixing portion 313b may protrude from the rim of the lens frame 310. The first fixing portion 313a and the second fixing portion 313b may be spaced apart from each other. The edge of the waveguide 320 and the edge of the second lens 350 may be disposed between the first fixing portion 313a and the second fixing portion 313b and may be fixed to the lens frame 310. The first fixing portion 313a and the second fixing portion 313b may allow the waveguide 320 and the second lens 350 to be fixed to the lens frame 310.

According to an embodiment, the lens frame 310 may include a third fixing portion 310d. The third fixing portion 310d may protrude from at least a portion of the connection portion 310a. When the holder 340 is disposed on the lens frame 310, the third fixing portion 310d may contact a portion of the holder 340 to limit and/or reduce separation of the holder 340 from the lens frame 310.

Referring to FIG. 6, a state in which the first lens 330 fixed to the holder 340 is fixed to the lens frame 310 is illustrated. For example, the holder 340 may be fixed to the lens frame 310 in a state in which the inserted portion 342 of the holder 340 is aligned with and inserted into the accommodating portion (e.g., the accommodating portion 312 of FIG. 3) of the lens frame 310. At least a portion of the holder 340 may be covered by the third fixing portion 310d.

FIG. 7 is a cross-sectional view of the lens assembly 300 taken along line C-C' of FIG. 6.

Referring to FIG. 7, the front side 321 of the waveguide 320 may include a flat surface. The first surface 331 of the first lens 330 may include a flat surface. The front side 321 may be disposed parallel to the first surface 331.

According to the illustrated embodiment, the front side 321 may be spaced apart from the first surface 331, but the disclosure is not limited thereto. For example, as the front side 321 and the first surface 331 contact each other, no gap may be formed therebetween.

FIG. 8 is a perspective view of a lens assembly according to an embodiment of the disclosure.

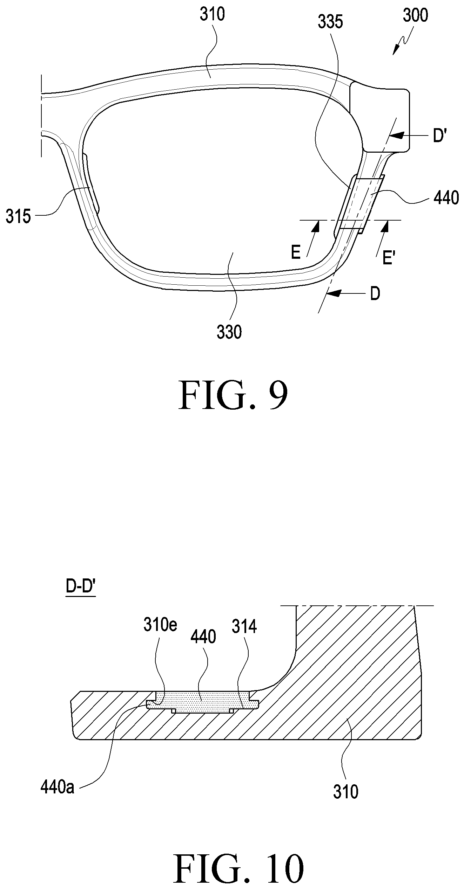

FIG. 9 is a plan view of the lens assembly according to an embodiment of the disclosure.

FIG. 10 is a cross-sectional view illustrating a lens frame and a holder according to an embodiment of the disclosure.

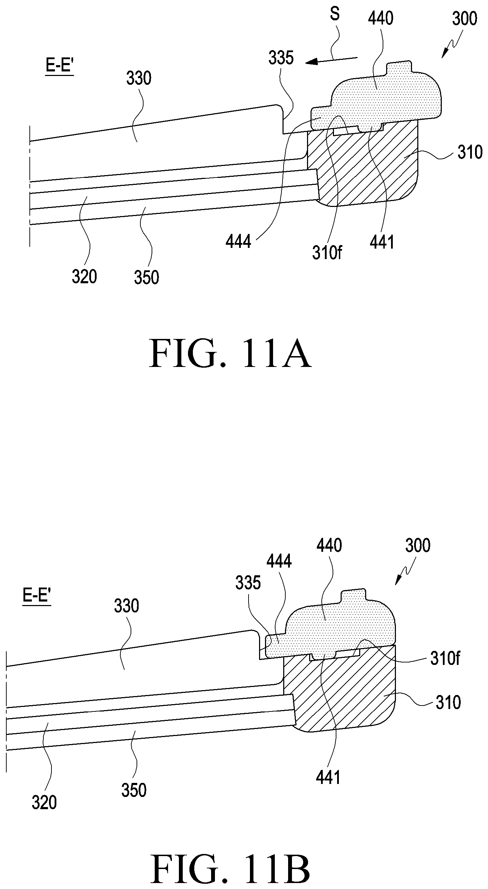

FIGS. 11A and 11B are cross-sectional views of the lens assembly according to an embodiment of the disclosure.

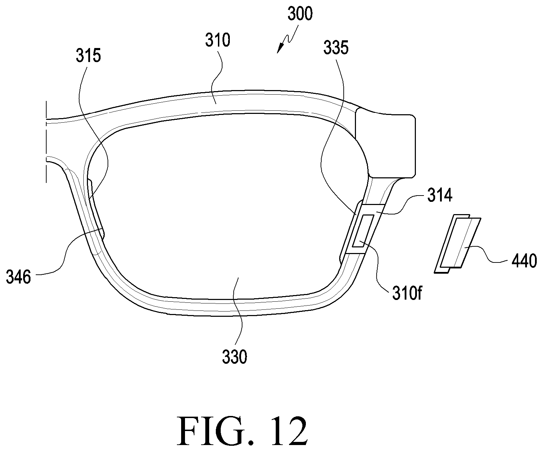

FIG. 12 is a perspective view illustrating a state in which the holder is separated, according to an embodiment of the disclosure.

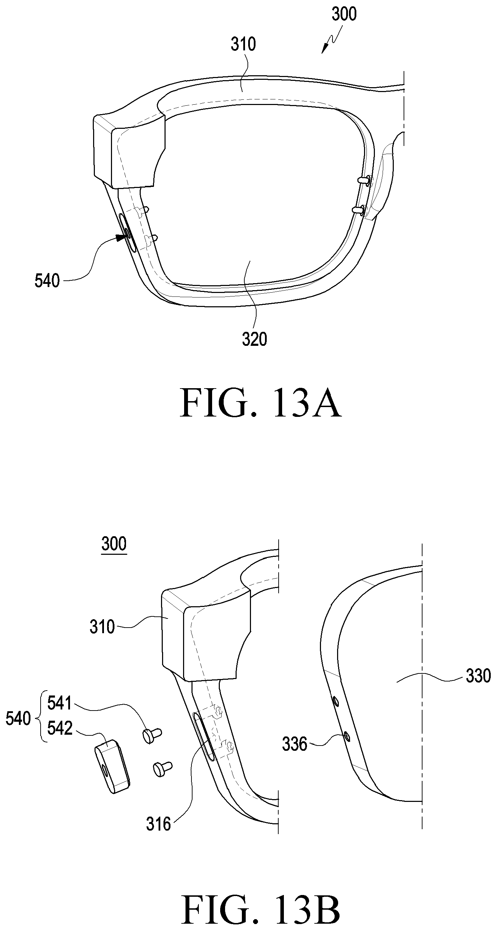

The embodiments of FIGS. 8 to 12 may be combined with the embodiments of FIGS. 1 to 7 or the embodiments of FIGS. 13A to 15.

Configurations of FIGS. 8 to 12 may be partially or entirely the same as configurations of FIGS. 3 to 7.

Referring to FIGS. 8 to 12, the lens assembly 300 may include a lens frame 310, a waveguide 320, a first lens 330, a holder 440, or a second lens 350.

Referring to FIG. 8, the first lens 330 may be detachably coupled to the lens frame 310. For example, the first lens 330 may be fixed to the lens frame 310 by the holder 440.

According to an embodiment, the first lens 330 may include a groove 335 recessed in a lateral surface of the first lens 330.

According to an embodiment, the lens frame 310 may include a fourth fixing portion 315. The fourth fixing portion 315 may protrude from at least a portion of a rim of the lens frame 310. The fourth fixing portion 315 may contact at least a portion of the first lens 330 in a state in which the first lens 330 is stacked and/or disposed on the waveguide 320. The fourth fixing portion 315 may limit and/or reduce separation of the first lens 330 from the lens frame 310.

According to an embodiment, in a state in which the first lens 330 is stacked and/or disposed on the waveguide 320, the holder 440 disposed on the lens frame 310 may slidingly move and be inserted into the groove 335 of the first lens 330. Separation of the first lens 330 from the lens frame 310 may be limited and/or reduced.

According to an embodiment, the holder 440 may be configured to slide with respect to the rim of the lens frame 310. For example, the holder 440 may be movably coupled to the rim of the lens frame 310.

Referring to FIG. 9, as the holder 440 is inserted or disposed in the groove 335 of the first lens 330, a state in which the first lens 330 is fixed to the lens frame 310 is illustrated. The holder 440 may be inserted into the groove 335 of the first lens 330 to fix the first lens 330 to the lens frame 310. When the holder 440 slides in a direction away from the first lens 330, the first lens 330 may be easily separated from the lens frame 310. When the holder 440 slides in a direction toward the first lens 330, the first lens 330 may be covered by the holder 440 and fixed to the lens frame 310.

FIG. 10 is a cross-sectional view taken along line D-D' of FIG. 9.

Referring to FIG. 10, the lens frame 310 may include a recess 314 formed to correspond to the shape of the holder 440. The holder 440 may be slidably coupled to the recess 314. The holder 440 may include a wing portion 440a protruding from at least a portion of the holder 440. The upper and lower ends of the wing portion 440a may be surrounded by a portion 310e of the lens frame 310. For example, the upper and lower ends of the wing portion 440a may be sandwiched by the lens frame 310.

FIGS. 11A and 11B are cross-sectional views taken along line E-E' of FIG. 9.

Referring to FIGS. 11A and 11B, the waveguide 320 may be disposed between the first lens 330 and the second lens 450.

Referring to FIG. 11A, a state is illustrated in which, while the first lens 330 is aligned with the lens frame 310 and faces the waveguide 320, the holder 440 slides in a direction s toward the first lens 330.

According to an embodiment, the holder 440 may include a guide protrusion 441. The guide protrusion 441 may protrude from one surface of the holder 440 (e.g., a surface facing the lens frame 310). The lens frame 310 may include a guide recess 310f in which the guide protrusion 441 is movable. The guide recess 310f may be recessed in a bottom surface defining the recess 314 of the lens frame 310.

According to an embodiment, the guide recess 310f may provide a space in which the guide protrusion 441 moves. As the guide recess 310f includes a stepped shape, the guide recess 310f may function as a stopper for the holder 440 moving together with the guide protrusion 441.

Referring to FIG. 11B, the holder 440 may include a protruding portion 444. In a state in which the holder 440 is slid toward the first lens 330, the protruding portion 444 may be disposed in, inserted into, or accommodated in the groove 335 of the first lens 330. The protruding portion 444 may cover the groove 335 so that separation of the first lens 330 from the lens frame 310 may be limited and/or reduced.

Referring to FIG. 12, a state in which the holder 440 is separated from the lens frame 310 is illustrated. The guide recess 310f may be formed in a portion of the lens frame 310 defining the recess 314.

According to an embodiment, the first lens 330 may further include another groove 346. The other groove 346 may be recessed in a lateral surface of the first lens 330. A fourth fixing portion 315 of the lens frame 310 may be disposed in, inserted into, or accommodated in the other groove 346.

FIG. 13A is a perspective view of a lens assembly according to an embodiment of the disclosure.

FIG. 13B is a perspective view of a lens assembly including a holder and a first lens according to an embodiment of the disclosure.

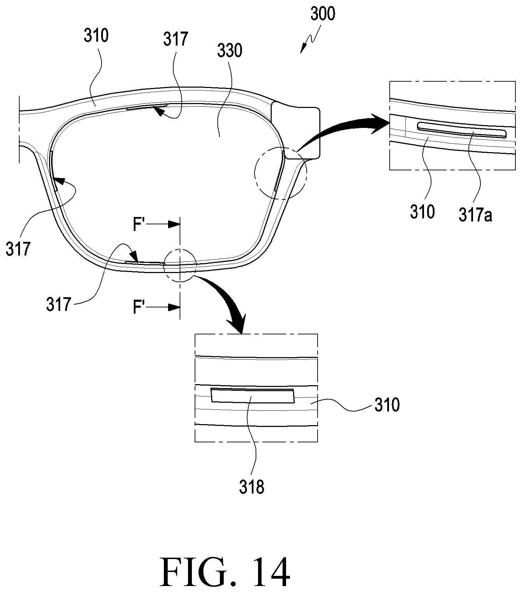

The embodiments of FIGS. 13A and 13B may be combined with the embodiments of FIGS. 1 to 12 or the embodiments of FIGS. 14 to 15.

Configurations of FIGS. 13A and 13B may be partially or entirely the same as configurations of FIGS. 3 to 12.

Referring to FIGS. 13A and 13B, the lens assembly 300 may include a lens frame 310, a waveguide 320, a first lens 330, a holder 540, or a second lens (e.g., the second lens 350 of FIG. 5).

According to an embodiment, the lens frame 310 may include a holder recess 316 formed on an outer surface of the rim of the lens frame 310.

According to an embodiment, the holder 540 may be detachably accommodated in the holder recess 316.

According to an embodiment, the holder 540 may pass through a lateral surface of the lens frame 310 and be coupled to the first lens 340.

According to an embodiment, the holder 540 may include a fastening member 541 (e.g., a bolt or a pin) and a cover 542.

According to an embodiment, the first lens 330 may include a holder hole 336 formed in a lateral surface of the first lens 330.

According to an embodiment, the fastening member 541 may be accommodated in the holder recess 316, may pass through the rim of the lens frame 310, and may be inserted into the holder hole 336. Accordingly, in a state in which the first lens 330 faces the waveguide 320, the first lens 330 may be detachably coupled to the lens frame 310.

According to an embodiment, in a state in which the first lens 330 is fixed to the lens frame 310 through the fastening member 541, the cover 542 may be accommodated in the holder recess 316 so that the fastening member 541 is not visually exposed to the outside of the lens frame 310.

According to an embodiment, a pair of holders 540 may be provided, but the disclosure is not limited thereto.

FIG. 14 is a plan view illustrating a lens assembly according to an embodiment of the disclosure.

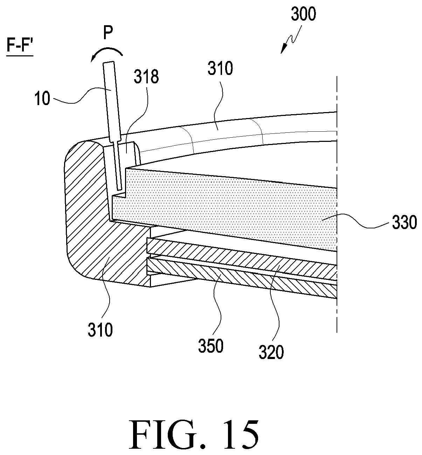

FIG. 15 is a cross-sectional of the lens assembly according to an embodiment of the disclosure.

The embodiments of FIGS. 14 and 15 may be combined with the embodiments of FIG. 1 to 13B.

Configurations of FIGS. 14 and 15 may be partially or entirely the same as configurations of FIGS. 1 to 13B.

Referring to FIGS. 14 to 15, the lens assembly 300 may include a lens frame 310, a waveguide 320, a first lens 330, a holder 317, or a second lens 350.

Referring to FIG. 14, the holder 317 may protrude from an inner surface of a rim of the lens frame 310. The lens frame 310 may include a plurality of holders 317.

According to an embodiment, when the first lens 330 is disposed and/or stacked on the waveguide (e.g., the waveguide 320 of FIG. 15), the holder 317 may cover an edge of the first lens 330. For example, the holder 317 may contact the edge of the first lens 330. The first lens 330 may be covered by the holder 317 and fixed to the lens frame 310. Separation of the first lens 330 from the lens frame 310 by the holder 317 may be limited and/or reduced.

According to an embodiment, the lens frame 310 may include an inserted recess 318 recessed in an inner surface of the rim of the lens frame 310.

FIG. 15 is a cross-sectional view taken along line F-F' of FIG. 14.

Referring to FIG. 15, the waveguide 320 may be disposed between the first lens 330 and the second lens 350.

According to an embodiment, in a state in which the first lens 330 is fixed to the lens frame 310, a user may separate the first lens 330 from the lens frame 310 by using a separate member 10 (e.g., a pin). For example, after the user inserts the member 10 into the inserted recess 318 and then tilts the member 10 as indicated by P, the first lens 330 may be easily separated from the lens frame 310.

AR glasses providing augmented reality may require a lens for adjusting a focal length of a virtual image for a virtual object and a lens for adjusting a focal length of a real image for a real object. In addition, AR glasses may additionally require a vision correction lens corresponding to eyesight of a user wearing the AR glasses.

According to an embodiment of the disclosure, as the lens for adjusting the focal length of a virtual image for a virtual object provides a vision correction function, a wearable electronic device having an overall small thickness may be disclosed.

However, problems to be solved in the disclosure are not limited to the above-mentioned problems and may be variously determined without departing from the spirit and scope of the disclosure.

According to an embodiment of the disclosure, there may be provided a wearable electronic device providing a structure in which a lens may be easily replaced in accordance with a user's eyesight.

The effects that may be obtained in the disclosure are not limited to the above-mentioned effects, and other effects not mentioned above will be clearly understood by those ordinarily skilled in the art to which the disclosure pertains from the following description.

According to an embodiment of the disclosure, the wearable electronic device 101 may include a lens frame 310.

According to an embodiment, the wearable electronic device 101 may include a waveguide 320 disposed in the lens frame 310 and including a front side 321 configured to face a user's eye when the wearable electronic device 101 is worn by the user, and a rear side 322 opposite to the front side 321.

According to an embodiment, the wearable electronic device 101 may include a first lens 330 disposed on the front side 321 of the waveguide 320, detachably coupled to the lens frame 310, and configured to adjust a focal length of light for a virtual image output from the waveguide 320 and a focal length of light for an external real object.

According to an embodiment, the wearable electronic device 101 may include a second lens 350 disposed on the rear side 322 of the waveguide 320, coupled to the waveguide 320 to be formed integrally with the waveguide 320, and configured to adjust a focal length of light for an external real object.

According to an embodiment, the waveguide 320 may further include a diffractive element 325 formed on the rear side 322.

According to an embodiment, the first lens 330 may include a first surface 331 facing the front side 321 and a second surface 332 opposite to the first surface 331.

According to an embodiment, the first surface 331 may include a flat surface.

According to an embodiment, the front side 321 may include a flat surface.

According to an embodiment, the first surface 331 may contact the front side 321.

According to an embodiment, the first lens 330 may have negative lens power.

According to an embodiment, the second lens 350 may have positive lens power.

According to an embodiment, the wearable electronic device 101 may further include a holder 340 configured to fix the first lens 330 to the lens frame 310.

According to an embodiment, the holder 340 may surround an edge of the first lens 330.

According to an embodiment, the holder 340 may include an inserted portion 342 protruding from at least a portion of the holder 340.

According to an embodiment, the lens frame 310 may include an accommodating portion 312 accommodating the inserted portion 342.

According to an embodiment, the holder 340 may further include a slit 343 formed on an outer surface of the inserted portion 342.

According to an embodiment, the holder 340 may further include a magnet disposed in the inserted portion 342.

According to an embodiment, the first lens 330 may further include a protrusion 334 formed on a lateral surface 333 of the first lens 330.

According to an embodiment, the holder 340 may include a recess 344 accommodating the protrusion 334.

According to an embodiment, an edge of the waveguide 320 and an edge of the second lens 350 may be surrounded by the lens frame 310.

According to an embodiment, the lens frame 310 may further include a first fixing portion 313a protruding from the lens frame 310, and a second fixing portion 313b protruding from the lens frame 310 and spaced apart from the first fixing portion 313a.

According to an embodiment, the edge of the waveguide 320 and the edge of the second lens 350 may be disposed between the first fixing portion 313a and the second fixing portion 313b.

According to an embodiment, the waveguide 320 may be disposed between the first lens 330 and the second lens 350.

According to an embodiment of the disclosure, the wearable electronic device 101 may include a lens frame 310.

According to an embodiment, the wearable electronic device 101 may include a waveguide 320 disposed in the lens frame 310 and including a front side 321 configured to face a user's eye when the wearable electronic device 101 is worn by the user, and a rear side 322 opposite to the front side 321.

According to an embodiment, the wearable electronic device 101 may include a first lens 330 disposed on the front side 321 of the waveguide 320, detachably coupled to the lens frame 310, and configured to adjust a focal length of light for a virtual image output from the waveguide 320 and a focal length of light for an external real object.

According to an embodiment, the wearable electronic device 101 may further include a holder 317, 340, 440, or 540 configured to fix the first lens 330 to the lens frame 310.

According to an embodiment, the wearable electronic device 101 may include a second lens 350 disposed on the rear side 322 of the waveguide 320 and configured to adjust a focal length of light for an external real object.

According to an embodiment, the holder 317 may protrude from at least a portion of the lens frame 310.

According to an embodiment, the holder 340 may surround an edge of the first lens 330.

According to an embodiment, the holder 440 may be slidably coupled to the lens frame 310.

According to an embodiment, the holder 540 may pass through a lateral surface of the lens frame 310 and be coupled to the first lens 330.

Although specific embodiments have been described above in the detailed description of the disclosure, it will be apparent to those ordinarily skilled in the art that various modifications may be made without departing from the scope of the disclosure.

## Claims

1. A wearable electronic device (101), comprising:
a lens frame (310);
a waveguide (320) disposed on the lens frame (310) and including a front side (321) configured to face a user's eye when the wearable electronic device (101) is worn by the user and a rear side (322) opposite to the front side (321);
a first lens (330) disposed on the front side (321) of the waveguide (320), detachably coupled to the lens frame (310), and configured to adjust a focal length of light for a virtual image output from the waveguide (320) and a focal length of light for an external real object; and
a second lens (350) disposed on the rear side (322) of the waveguide (320), coupled to the waveguide (320) to be formed integrally with the waveguide (320), and configured to adjust the focal length of light for the external real object.

2. The wearable electronic device of claim 1, wherein the waveguide (320) further includes a diffractive element (325) formed on the rear side (322).

3. The wearable electronic device of any one of claims 1 to 2, wherein the first lens (330) includes a first surface (331) facing the front side (321) and a second surface (332) opposite to the first surface (331), and
wherein the first surface (331) includes a flat surface.

4. The wearable electronic device of any one of claims 1 to 3, wherein the front side (321) includes a flat surface.

5. The wearable electronic device of any one of claims 1 to 4, wherein the first surface (331) contacts the front side (321).

6. The wearable electronic device of any one of claims 1 to 5, wherein the first lens (330) has negative lens power, and
wherein the second lens (350) has positive lens power.

7. The wearable electronic device of any one of claims 1 to 6, further comprising:
a holder (340) configured to fix the first lens (330) to the lens frame (310).

8. The wearable electronic device of any one of claims 1 to 7, wherein the holder (340) surrounds an edge of the first lens (330).

9. The wearable electronic device of any one of claims 1 to 8, wherein the holder (340) includes an inserted portion (342) protruding from at least a portion of the holder (340), and
wherein the lens frame (310) includes an accommodating portion (312) accommodating the inserted portion (342).

10. The wearable electronic device of any one of claims 1 to 8, wherein the holder (340) further includes a slit (343) formed on an outer surface of the inserted portion (342).

11. The wearable electronic device of any one of claims 1 to 10, wherein the holder (340) further includes a magnet disposed in the inserted portion (342).

12. The wearable electronic device of any one of claims 1 to 11, wherein the first lens (330) further includes a protrusion (334) formed on a lateral surface (333) of the first lens (330), and
wherein the holder (340) includes a recess (344) accommodating the protrusion (334).

13. The wearable electronic device of any one of claims 1 to 12, wherein an edge of the waveguide (320) and an edge of the second lens (350) are surrounded by the lens frame (310).

14. The wearable electronic device of any one of claims 1 to 13, wherein the lens frame (310) further includes a first fixing portion (313a) protruding from the lens frame (310), and a second fixing portion (313b) protruding from the lens frame (310) and spaced apart from the first fixing portion (313a), and
wherein the edge of the waveguide (320) and the edge of the second lens (350) are disposed between the first fixing portion (313a) and the second fixing portion (313b).

15. The wearable electronic device of any one of claims 1 to 14, wherein the waveguide (320) is disposed between the first lens (330) and the second lens (350).
